# EUROPEAN PATENT SPECIFICATION

(11) **EP 4 382 771 B1**
(45) Date of publication and mention of the grant of the patent: **18.11.2026**
(21) Application number: 22211754.1
(22) Date of filing: 06.12.2022
(51) Int. Cl.: F16H 37/08, B60K 1/00, F16H 3/54

(54) **A POWERTRAIN FOR A VEHICLE AND A VEHICLE**
ANTRIEBSSTRANG FÜR EIN FAHRZEUG UND FAHRZEUG
GROUPE MOTOPROPULSEUR POUR UN VÉHICULE ET VÉHICULE

(43) Date of publication of application: 12.06.2024
(73) Proprietor: VOLVO TRUCK CORPORATION, 405 08 Göteborg (SE)
(72) Inventor: Folkesson, Johan, 511 62 Skene (SE); Hedman, Anders, 442 67 Marstrand (SE)
(74) Representative: Kransell & Wennborg KB

(56) References cited:
- EP-A1- 4 170 202
- EP-B1- 3 669 100
- DE-A1- 2 420 232

## Description

### TECHNICAL FIELD

The invention relates generally to a powertrain for a vehicle comprising a transmission, wherein the transmission comprises a planetary gearset and a number of additional gearsets. The invention can be applied in heavy-duty vehicles, such as trucks, buses, and construction equipment. Although the invention may be described with respect to a particular vehicle, the invention is not restricted to any particular vehicle.

### BACKGROUND

Electrification of vehicles is an ongoing trend for the automotive industry. The electrification trend is not only ongoing for passenger cars but also for commercial vehicles, including heavy-duty trucks, buses, construction equipment, etc.

For large and heavy electric vehicles, i.e. vehicles including an at least partly electric powertrain, it is known to use a transmission in the powertrain. Even though there are many different known transmission types available for large and heavy vehicles, these transmissions are often adapted for traditional powertrains including internal combustion engines.

For example, EP 3 669 100 B1 relates to a powertrain for a vehicle, the powertrain comprising:
- a transmission, a propeller shaft and a differential gear, wherein the transmission comprises an output shaft which is drivingly connected to the propeller shaft, the propeller shaft is drivingly connected to the differential gear and the differential gear is configured to provide a driving torque to a respective half-shaft of a drive axle for driving the vehicle, and the transmission further comprises:
- an input shaft configured to be drivingly connected to a power unit,
- a planetary gearset comprising a sun gearwheel, planet gearwheels, a planet gearwheel carrier and a planet ring gearwheel,
- a first gearset comprising a first gearwheel and a second gearwheel,
- a second gearset comprising a third gearwheel and a fourth gearwheel,
- wherein the transmission further comprises at least two gear engaging devices which are configured to provide four selectable gear connections, comprising, a first selectable gear connection in which the planetary gearset is internally locked, and
- wherein the planetary gearset is located on a first side of a first geometric sectional plane intersecting the differential gear.

As such, there is a strive to develop improved and cost-effective powertrains for at least partly electric vehicles.

### SUMMARY

According to a first aspect of the invention as claimed, there is provided a powertrain for a vehicle. The powertrain comprises a transmission, a propeller shaft and a differential gear. The transmission comprises an output shaft which is drivingly connected or connectable to the propeller shaft, the propeller shaft is drivingly connected to the differential gear and the differential gear is configured to provide a driving torque to a respective half-shaft of a drive axle for driving the vehicle. The transmission further comprises:
- an input shaft configured to be drivingly connected to a power unit;
- a planetary gearset comprising a sun gearwheel, one or more planet gearwheels, a planet gearwheel carrier and a planet ring gearwheel;
- a first gearset comprising a first gearwheel and a second gearwheel;
- a second gearset comprising a third gearwheel, a fourth gearwheel and a fifth gearwheel;
- wherein the first gearwheel is in driving connection with the second gearwheel, each one of the third and fourth gearwheels is in driving connection with the fifth gearwheel and wherein one of the third, fourth or fifth gearwheels is rotatably connectable or connected to the output shaft.
The transmission further comprises at least two gear engaging devices which are configured to provide at least four selectable gear connections, comprising:
- a first selectable gear connection in which the planetary gearset is internally locked;
- a second selectable gear connection in which the planet gearwheel carrier is rotatably connected to the third gearwheel;
- a third selectable gear connection in which the planet ring gearwheel is drivingly connected to the fourth gearwheel; and
- a fourth selectable gear connection in which the planet ring gearwheel is rotatably locked to a fixed member;
The planet ring gearwheel is rotatably connected or connectable to the first gearwheel and a first gear engaging device of the at least two gear engaging devices is configured to be provided in a first gear engaging device first state where the first gear engaging device rotationally connects the second gearwheel to the fourth gearwheel and in a first gear engaging device second state where the first gear engaging device rotationally disconnects the second gearwheel from the fourth gearwheel, wherein the third selectable gear connection is provided by at least setting the first gear engaging device in the first gear engaging device first state. The planetary gearset is located on a first side of a first geometric sectional plane intersecting the differential gear and at least one of the first and second gearsets is located on a second opposite side of the first geometric sectional plane.

The first aspect of the invention as claimed provides an improved powertrain which alleviates at least one drawback of the prior art. A technical benefit may include that the powertrain configuration solves conflicting requirements of packaging and performance. More specifically, the powertrain according to the first aspect of the invention as claimed may provide an energy efficient and high-performing powertrain which can be efficiently packaged in a vehicle.

By way of example, it has been realized that it is beneficial to provide a torque split, or power split, from the input shaft to the output shaft. By a power split is herein meant that instead of providing a single torque path from the input shaft to the output shaft, torque is transferred from the input shaft to the output shaft via two separate torque paths. By providing a power split for a selected gear, forces exerted on the gearwheels may be reduced compared to forces exerted on gearwheels if only one torque path was used. By the powertrain as disclosed herein, a selected gear with a power split, or torque split, will be achieved by providing the second and third selectable gear connections.

It has further been realized that it is advantageous to configure the third selectable gear connection so that the second and fourth gearwheels can be rotationally connected and disconnected. For example, it has been realized that it is advantageous to be able to rotationally disconnect a gearwheel connection as far downstream as possible, i.e. as far away as possible from the power unit. As a consequence of the configuration of the third selectable gear connection, the first gearwheel, when not taking part in transferring torque to the output shaft, may rotate with a lower rotational speed. This implies lower load-independent losses in the transmission. A further advantage of examples of the first aspect of the invention as claimed is that it may result in fewer gear engaging devices, implying cost-effectiveness and a compact configuration.

Moreover, by locating parts of the transmission on different sides of the first geometric sectional plane as disclosed herein, a more compact configuration may be achieved, allowing the powertrain to fit in a vehicle more easily. Thus, and as indicated above, the powertrain can be efficiently packaged in a vehicle.

By internally locking the planetary gearset is herein meant that the sun gearwheel, the planet gearwheel carrier, and the planet ring gearwheel are rotationally connected.

By the terms "rotationally connected" and "rotationally connects" is intended "connected for common rotation with". For example, in the first gear engaging device first state, the first gear engaging device connects the second gearwheel for common rotation with the fourth gearwheel around a common axis of rotation.

By a "driving connection" between two rotating parts is herein intended that torque can be transmitted between the parts, and that the rotational speeds of the parts are proportional. When two gearwheels are drivingly connected, torque can be transmitted between the gearwheels. This may be achieved by the gearwheels being in meshing engagement, or by a first gearwheel being in meshing engagement with a second gearwheel, which is in turn in meshing connection with a third gearwheel, or by a first gearwheel being in meshing engagement with a second gearwheel, which is rotationally connected to a third gearwheel, which is in turn in meshing connection with a fourth gearwheel. Thus, in order to be drivingly connected, it is not necessary that two gearwheels are in meshing engagement. It is sufficient that the rotation of one of the gearwheels inevitably leads to the rotation of the other one of the gearwheels.

In some examples of the first aspect of the invention as claimed, the first and the second gearsets are located on the second opposite side of the first geometric sectional plane. Thereby, further improved packaging of the powertrain may be achieved, i.e., by locating the planetary gearset on the first side and the first and second gearsets on the second opposite side of the differential gear.

In some examples of the first aspect of the invention as claimed, a respective rotational axis of the input shaft and/or the output shaft is perpendicular to the first geometric sectional plane.

In some examples of the first aspect of the invention as claimed, the powertrain further comprises a final drive gearset which drivingly connects the propeller shaft to the differential gear.

In some examples of the first aspect of the invention as claimed, the final drive gearset is a bevel gearset. This may imply that the respective rotational axis of the input shaft and/or the output shaft is/are arranged perpendicular to rotational axes of the half-shafts. For example, the bevel gearset may be a hypoid bevel gearset.

In some examples of the first aspect of the invention as claimed, the final drive gearset comprises at least a first and second drivingly connected cylindrical gearwheels. This may imply that the respective rotational axis of the input shaft and/or the output shaft is/are arranged parallel to rotational axes of the half-shafts.

In some examples of the first aspect of the invention as claimed, the final drive gearset comprises a final drive first gearwheel which is drivingly connected to the differential gear, wherein the planetary gearset and the final drive first gearwheel are located so that a second geometric sectional plane which is perpendicular to a longitudinal direction of the powertrain intersects the planetary gearset and the final drive first gear wheel. Thereby, a more compact packaging of the powertrain may be achieved. The longitudinal direction of the powertrain typically corresponds to a direction of the respective rotational axis of the input shaft and/or the output shaft.

In some examples of the first aspect of the invention as claimed, at least one of the at least two gear engaging devices is located on the first side of the first geometric sectional plane. This may imply an improved packaging of the powertrain in a vehicle. For example, a gear engaging device for providing the fourth selectable gear connection may be located on the first side of the first geometric sectional plane.

In some examples of the first aspect of the invention as claimed, a second gear engaging device of the at least two gear engaging devices is configured to provide the first selectable gear connection and the second selectable gear connection. This may imply a more efficient transmission configuration, requiring fewer gear engaging devices.

In some examples of the first aspect of the invention as claimed, the transmission is configured to provide the fourth selectable gear connection by directly locking the planet ring gearwheel to the fixed member or by locking the planet ring gearwheel to the fixed member via the first gearwheel and/or the second gearwheel.

In some examples of the first aspect of the invention as claimed, the third, fourth and fifth gearwheels are arranged so that they are provided in a first common gear plane of the transmission which is perpendicular to rotational axes of the third, fourth and fifth gearwheels.

In some examples of the first aspect of the invention as claimed, the first and second gearwheels are arranged so that they are provided in a second common gear plane of the transmission which is perpendicular to rotational axes of the first and second gearwheels.

In some examples of the first aspect of the invention as claimed, the first gearset is arranged in-between the planetary gearset and the second gearset.

According to a second aspect of the invention as claimed, there is provided a vehicle comprising a powertrain according to any one of the examples of the first aspect of the invention. Advantages and effects of the second aspect of the invention are analogous to the advantages and effects of the first aspect of the invention.

Additional features and advantages of the invention as claimed are disclosed in the following description and drawings. There are also disclosed herein control units associated with the above discussed technical benefits.

### BRIEF DESCRIPTION OF THE DRAWINGS

With reference to the appended drawings, below follows a more detailed description of examples of the invention as claimed.
**FIG. 1** is a side view of a vehicle according to an example of the disclosure.
**FIG. 2** is a schematic view of a transmission of a powertrain according to an example of the invention as claimed.
**FIGS. 3-5** are schematic views of a powertrain according to examples of the invention as claimed.
**FIG. 6** is a table with a 1st to a 4th gear according to an example of the invention as claimed.

The drawings show diagrammatic exemplifying examples of the present invention and are thus not necessarily drawn to scale. It shall be understood that the examples shown and described are exemplifying and that the invention as claimed is not limited to these examples. It shall also be noted that some details in the drawings may be exaggerated in order to better describe and illustrate the invention. Like reference characters refer to like elements throughout the description, unless expressed otherwise.

### DETAILED DESCRIPTION

The description represents the necessary information to enable those skilled in the art to practice the invention as claimed.

The present invention as claimed aims to provide an improved powertrain configuration which alleviates at least one drawback of the prior art, or which at least provides a suitable alternative. For example, an object of the invention is to provide an improved powertrain for a vehicle which achieves at least one of the following: 1) it solves conflicting requirements of packaging and performance, 2) it is cost-effective, and 3) it enables a high degree of commonality between electric powertrains of different power levels and/or with different types of installations in vehicles.

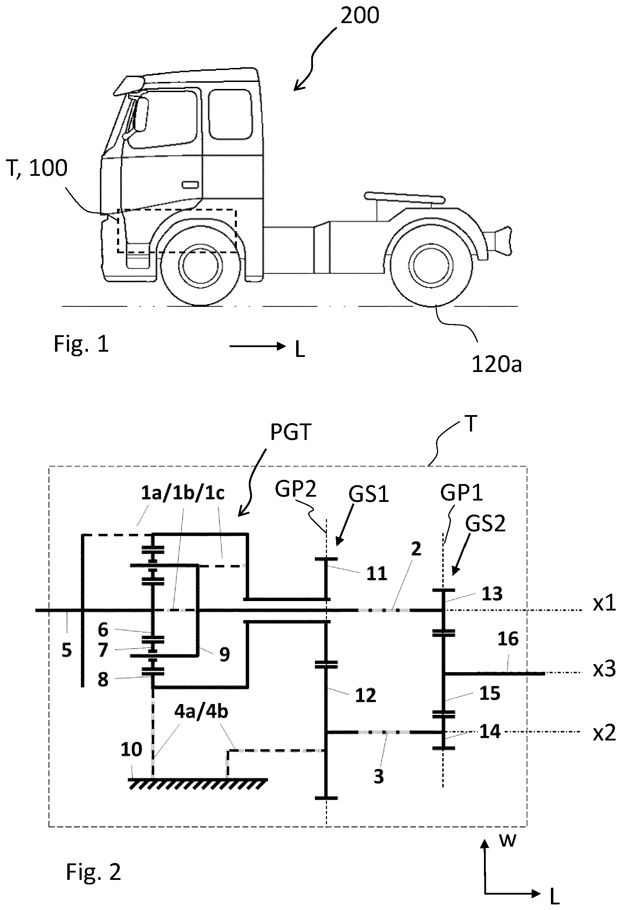

FIG. 1 depicts a side view of a vehicle 200 according to an example of the invention. The vehicle 200 in FIG. 1 is a truck, or more specifically a towing truck for towing one or more trailers (not shown). The vehicle 200 may be an electric vehicle which at least partly uses electric power for propulsion. Even though an electric truck 200 is shown, it shall be noted that the vehicle may be any type of vehicle, such as a hybrid vehicle comprising an internal combustion engine and one or more electric motors for propulsion. Furthermore, the vehicle may not only be a truck. Accordingly, the vehicle could be any type of vehicle, such as a bus, a working machine etc. The vehicle 200 comprises a powertrain 100. The powertrain comprises a transmission T. The powertrain 100 and the transmission T will be described further in the below.

FIG. 2 depicts a transmission T according to an example of the invention as claimed. The transmission T is thus part of a powertrain 100 according to the first aspect of the invention as claimed, e.g., the powertrain 100 in FIG. 1. The transmission T as shown in FIG. 2 comprises:
- an input shaft 5 configured to be drivingly connected to a power unit (not shown);
- a planetary gearset PGT comprising a sun gearwheel 6, one or more planet gearwheels 7, a planet gearwheel carrier 9 and a planet ring gearwheel 8;
- a first gearset GS1 comprising a first gearwheel 11 and a second gearwheel 12; and
- a second gearset GS2 comprising a third gearwheel 13, a fourth gearwheel 14 and a fifth gearwheel 15.

The first gearwheel 11 is in driving connection with the second gearwheel 12, each one of the third and fourth gearwheels 13, 14 is in driving connection with the fifth gearwheel 15, and one of the third, fourth or fifth gearwheels 13, 14, 15 is rotatably connectable or connected to an output shaft 16. In this example, the first gearwheel 11 is in meshing engagement with the second gearwheel 12, and each one of the third and fourth gearwheels 13, 14 is in meshing engagement with the fifth gearwheel 15. However, in other examples, the driving connection may be enabled by use of at least one intermediate gearwheel in-between any two of the drivingly connected gearwheels.

Furthermore, as shown, the fifth gearwheel 15 may be drivingly connected to the output shaft 16. More particularly, the fifth gearwheel 15 may be permanently arranged to rotate with the output shaft 16. Furthermore, as shown, the fifth gearwheel 15 may be the gearwheel with the largest diameter out of the gearwheels 13, 14 and 15.

The transmission T further comprises at least two gear engaging devices (not shown in FIG. 2) which are configured to provide at least four selectable gear connections, comprising:
- a first selectable gear connection 1a-c in which the planetary gearset PGT is internally locked;
- a second selectable gear connection 2 in which the planet gearwheel carrier 9 is rotatably connected to the third gearwheel 13;
- a third selectable gear connection 3 in which the planet ring gearwheel 8 is drivingly connected to the fourth gearwheel 14; and
- a fourth selectable gear connection 4a-b in which the planet ring gearwheel 8 is rotatably locked to a fixed member 10.

The fixed member 10 may for example be a transmission housing member.

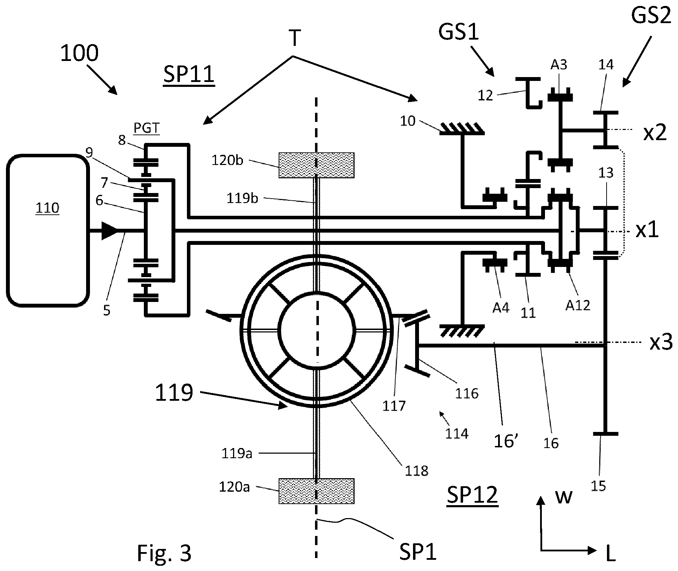

The planet ring gearwheel 8 is in the shown example rotatably connected to the first gearwheel 11. Furthermore, a first gear engaging device A3 (see FIGS. 3-5) of the at least two gear engaging devices is configured to be provided in a first gear engaging device first state where the first gear engaging device A3 rotationally connects the second gearwheel 12 to the fourth gearwheel 14 and in a first gear engaging device second state where the first gear engaging device A3 rotationally disconnects the second gearwheel 12 from the fourth gearwheel 14, wherein the third selectable gear connection 3 is provided by at least setting the first gear engaging device A3 in the first gear engaging device first state.

As further shown in FIG. 2, the third, fourth and fifth gearwheels 13, 14, 15 may be arranged so that they are provided in a first common gear plane GP1 of the transmission T which is perpendicular to rotational axes x1, x2, x3 of the third, fourth and fifth gearwheels 13, 14, 15. Still further, as shown in FIG. 2, the first and second gearwheels 11, 12 may be arranged so that they are provided in a second common gear plane GP2 of the transmission T which is perpendicular to rotational axes x1, x2 of the first and second gearwheels 11, 12. As may be gleaned from fig. 2, a common gear plane for a number of gearwheels may mean that the common gear plane intersect material portions of each gearwheel of the number of gearwheels. In particular, the common gear plane may intersect cogs of each gearwheel of the number of gearwheels.

As further shown in FIG. 2, the planetary gearset PGT, the first gearwheel 11 and the third gearwheel 13 may be aligned with respect to the rotational axis x1, being a common rotational axis. Yet further, as shown, the second gearwheel 12 and the fourth gearwheel 14 may be aligned with respect to the rotational axis x2, also being a common rotational axis. The rotational axes x1, x2, and x3 are preferably parallel with respect to each other.

FIGS. 3-5 show schematic views of examples of powertrains 100 for a vehicle 200 according to examples of the invention as claimed. The powertrain 100 comprises a transmission T, herein an example of the transmission T as shown in FIG. 2. The powertrain 100 further comprises a propeller shaft 16'. In these examples, the output shaft 16 and the propeller shaft 16' are arranged as one single common shaft. It shall however be understood that the output shaft and the propeller shaft may alternatively be separate shafts which are drivingly connected or connectable, such as drivingly connected via a range gear assembly (not shown). For example, the range gear assembly may be configured to selectively provide a low range gear and a high range gear. The range gear assembly typically comprises a planetary gearset (not shown). The powertrain 100 may comprise additional members, such as a clutch member (not shown) between a power unit 110 and the input shaft 5.

The powertrain 100 further comprises a differential gear 118. The output shaft 16 is drivingly connected or connectable to the propeller shaft 16', the propeller shaft 16' is drivingly connected to the differential gear 118 and the differential gear 118 is configured to provide a driving torque to a respective half-shaft 119a, 119b of a drive axle 119 for driving the vehicle 200. As shown, wheels 120a, 120b are mounted on each half shaft 119a, 119b. In some examples, a gearing (not shown) may be provided between the respective half-shaft 119a, 119b and the respective wheel 120a, 120b. For example, the gearing may be any one of a hub reduction or a portal axle gearset. It shall be understood that not only wheels may be used but e.g., crawler members may additionally or alternatively, be used.

As mentioned in the above, the input shaft 5 is further configured to be connected to the power unit 110. According to one example, the power unit 110 forms part of the powertrain 100. The power unit 110 is typically an electric machine for driving the drive axle 119. The electric machine may also be used as a generator for e.g. charging an electric energy storage system (not shown), such as a high-voltage battery.

In the shown examples, the powertrain 100 has a longitudinal direction L and a transverse direction w which is perpendicular to the longitudinal direction L. The rotational axes x1, x2 and x3 may as shown extend along the longitudinal direction L. The longitudinal direction L of the powertrain 100 may correspond to a longitudinal direction L of the vehicle 200 and the transverse direction w of the powertrain 100 may correspond to a transverse direction of the vehicle 200. In alternative examples, the longitudinal direction L of the powertrain 100 may extend in the transverse direction of the vehicle 200.

In the examples shown in FIGS. 3-5, the driving connection between the fourth and the fifth gearwheels 14, 15 is indicated by a broken line therebetween.

As further depicted in FIGS. 3-5, the planetary gearset PGT is located on a first side SP11 of a first geometric sectional plane SP1 intersecting the differential gear 118 and at least one of the first and second gearsets GS1, GS2 is located on a second opposite side SP12 of the first geometric sectional plane SP1. As shown in FIGS. 3-5, the first and the second gearsets GS1, GS2 may be located on the second opposite side SP12 of the first geometric sectional plane SP1.

As further shown, the first geometric sectional plane SP1 may intersect a center point of the differential gear 118.

A respective rotational axis x1, x3 of the input shaft 5 and/or the output shaft 16 may as shown be perpendicular to the first geometric sectional plane SP1.

As further shown in the examples of FIGS. 3-5, the powertrain 100 may further comprise a final drive gearset 114 drivingly connecting the propeller shaft 16' to the differential gear 118. The final drive gearset 114 may as shown be a bevel gearset. For example, the bevel gearset 114 may be a hypoid bevel gearset. In an alternative example not shown, the final drive gearset may comprise at least a first and second drivingly connected cylindrical gearwheels.

The final drive gearset 114 may as shown comprise a final drive first gearwheel 117 which is drivingly connected to the differential gear118. The final drive gearset 114 may as further shown comprise a final drive second gearwheel 116 which is drivingly connected to the propeller shaft 16'. In this example, the final drive second gearwheel 116 is mechanically coupled to the propeller shaft 16'. The final drive first gearwheel 117 is herein in meshing engagement with the final drive second gearwheel 116, and may as shown form the bevel gearset 114.

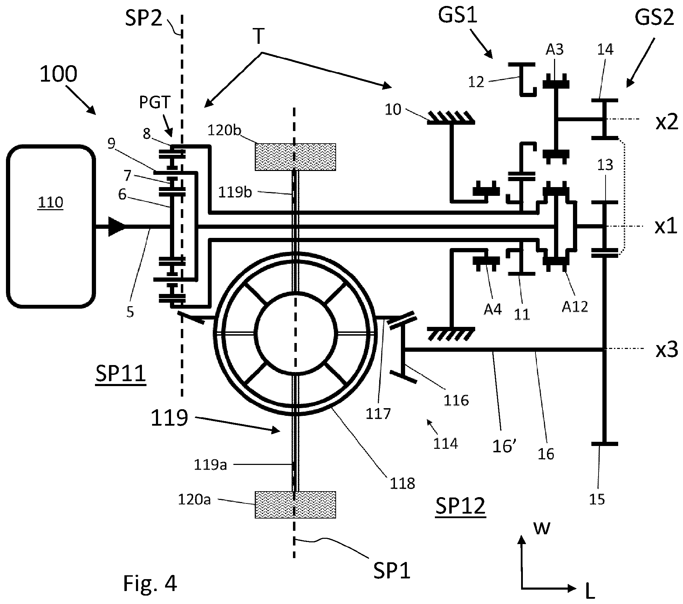

The example in FIG. 4 shows that the planetary gearset PGT and the final drive first gearwheel 117 may be located so that a second geometric sectional plane SP2 which is perpendicular to the longitudinal direction L of the powertrain 100 intersects the planetary gearset PGT and the final drive first gearwheel 117. As shown, the second geometric sectional plane SP2 may intersect cogs of the planetary gearset PGT and the final drive first gearwheel 117.

As shown in the examples of FIGS. 3-5, a second gear engaging device A12 of the at least two gear engaging devices may be configured to provide the first selectable gear connection 1a-c and the second selectable gear connection 2. Thereby, fewer gear engaging devices may be used. In the examples shown in FIGS. 3-5, the first selectable gear connection 1c is provided by rotatably connecting the planet gearwheel carrier 9 to the planet ring gearwheel 8.

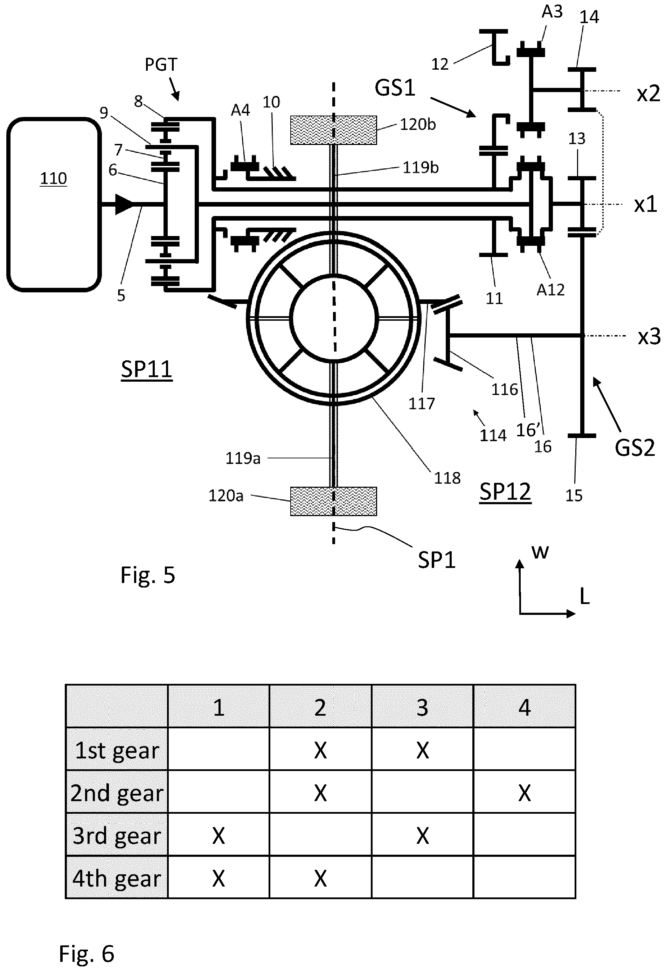

The example in FIG. 5 shows that at least one of the at least two gear engaging devices is located on the first side SP11 of the first geometric sectional plane SP1. In this example, a third gear engaging device A4 is located on the first side SP11 of the first geometric sectional plane SP1. As shown in FIGS. 3-4, the third gear engaging device A4 may alternatively be located on the second side SP12 of the first geometric sectional plane SP1. The third gear engaging device A4 is in the shown examples in FIGS. 3-5 configured to provide the fourth selectable gear connection 4a. More specifically, in the shown examples, the transmission T is configured to provide the fourth selectable gear connection 4a by directly locking the planet ring gearwheel 8 to the fixed member 10. In an alternative embodiment as depicted in FIG. 2, the transmission T may be configured to provide the fourth selectable gear connection 4b by locking the planet ring gearwheel 8 to the fixed member 10 via the first gearwheel 11 and/or the second gearwheel 12.

As further shown in FIGS. 2-5, the first gearset GS1 may be arranged in-between the planetary gearset PGT and the second gearset GS2, as seen along the longitudinal direction L of the powertrain 100. Alternative examples are also possible, such as arranging the planetary gearset PGT in-between the first and the second gearsets GS1, GS2, or arranging the second gearset GS2 in-between the planetary gearset PGT and the first gearset GS1, as seen along the longitudinal direction L of the powertrain 100.

As another example of the invention as claimed, which example is not shown in the figures, the powertrain may comprise more than one transmission according to the first aspect of the invention as claimed. In such example, each input shaft of the respective transmission may be configured to be drivingly connected to a respective power unit, e.g., a respective electric machine. For example, two transmissions of such a powertrain may share the same output shaft. Still further, the two transmissions may share the same fifth gearwheel. This implies a more compact high-performance powertrain configuration. Accordingly, a third gearwheel and a fourth gearwheel of a second transmission may be in driving connection with the fifth gearwheel 15 of the transmission T. Still further, any one of the third 13, fourth 14 and fifth gearwheel 15 of the transmission T may be any one of the third, fourth and fifth gearwheel of the second transmission.

The gear engaging devices A12, A3, A4 may for example be sleeve-formed members which are connected to respective shift forks (not shown). The shift forks are preferably connected to actuators (not shown) which in turn are preferably controlled by a transmission control unit (not shown). The at least four selectable gear connections may be provided by two to four gear engaging devices.

The transmission T may be set to a power split gear state in which first and second separate torque paths between the input shaft 5 and the output shaft 16 are achieved. The first torque path extends between the input shaft 5 and the output shaft 16 via the planet ring gearwheel 8, the first gearwheel 11, the second gearwheel 12, the fourth gearwheel 14 and the fifth gearwheel 15. The second torque path extends between the input shaft 5 and the output shaft 16 via the planet gearwheel carrier 9, the third gearwheel 13 and the fifth gearwheel 15. The power split gear state is set by providing the second and third selectable gear connections 2, 3. Accordingly, this may be set by use of the gear engaging devices A12 and A3 as described in the above. The power split gear state is preferably automatically set by use of the above-mentioned transmission control unit and associated actuators in response to a request to set the power split gear state.

For example, the power split gear state may refer to a "1st gear" of the transmission T.

The transmission T may for example have four different input/output speed ratios, or "gears". Fig. 6 depicts a table with four different input/output speed ratios, i.e. a 1st gear, a 2nd gear, a 3rd gear and a 4th gear. The 1st to 4th gears are provided by the above mentioned at least four selectable gear connections 1-4.

Accordingly, the 1st gear may refer to the power split mode. The 2nd gear may be provided by selecting the second selectable gear connection 2 and the fourth selectable gear connection 4, e.g., any one of 4a-b. The 3rd gear may be provided by selecting the first and the third selectable gear connections 1, 3. The 4th gear may be provided by selecting the first and the second selectable gear connection 1, 2, e.g., 2 and any one of 1a-c.

Each gear engaging device may be settable to two or three different positions, by e.g., moving each gear engaging device along the longitudinal direction L of the powertrain 100. In the examples shown in FIGS. 3-5, the gear engaging devices A3 and A4 are settable to two different positions and the gear engaging device A12 is settable to three different positions.

Each one of the 1st to 4th gears are preferably automatically set by use of the above-mentioned transmission control unit and associated actuators in response to a request to set the respective input/output speed ratio of the 1st to 4th gears.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the invention as claimed.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which the invention as claimed belongs.

It is to be understood that the present invention as claimed is not limited to the examples described above and illustrated in the drawings; rather, the skilled person will recognize that many changes and modifications of said examples may be made within the scope of the invention as defined in the appended claims.

## Claims

1. A powertrain (100) for a vehicle (200), the powertrain (100) comprising:
- a transmission (T), a propeller shaft (16') and a differential gear (118), wherein the transmission (T) comprises an output shaft (16) which is drivingly connected or connectable to the propeller shaft (16'), the propeller shaft (16') is drivingly connected to the differential gear (118) and the differential gear (118) is configured to provide a driving torque to a respective half-shaft (119a, 119b) of a drive axle (119) for driving the vehicle (200), and the transmission (T) further comprising:
- an input shaft (5) configured to be drivingly connected to a power unit (110);
- a planetary gearset (PGT) comprising a sun gearwheel (6), one or more planet gearwheels (7), a planet gearwheel carrier (9) and a planet ring gearwheel (8);
- a first gearset (GS1) comprising a first gearwheel (11) and a second gearwheel (12);
- a second gearset (GS2) comprising a third gearwheel (13), a fourth gearwheel (14) and a fifth gearwheel (15);
- wherein the first gearwheel (11) is in driving connection with the second gearwheel (12), each one of the third and fourth gearwheels (13, 14) is in driving connection with the fifth gearwheel (15) and wherein one of the third, fourth or fifth gearwheels (13, 14, 15) is rotatably connectable or connected to the output shaft (16), and
- wherein the transmission (T) further comprises at least two gear engaging devices (A12, A3, A4) which are configured to provide at least four selectable gear connections, comprising:
- a first selectable gear connection (1a-c) in which the planetary gearset (PGT) is internally locked;
- a second selectable gear connection (2) in which the planet gearwheel carrier (9) is rotatably connected to the third gearwheel (13);
- a third selectable gear connection (3) in which the planet ring gearwheel (8) is drivingly connected to the fourth gearwheel (14); and
- a fourth selectable gear connection (4a-b) in which the planet ring gearwheel (8) is rotatably locked to a fixed member (10);
- wherein the planet ring gearwheel (8) is rotatably connected or connectable to the first gearwheel (11) and wherein a first gear engaging device (A3) of the at least two gear engaging devices is configured to be provided in a first gear engaging device first state where the first gear engaging device (A3) rotationally connects the second gearwheel (12) to the fourth gearwheel (14) and in a first gear engaging device second state where the first gear engaging device (A3) rotationally disconnects the second gearwheel (12) from the fourth gearwheel (14), wherein the third selectable gear connection (3) is provided by at least setting the first gear engaging device (A3) in the first gear engaging device first state, and
- wherein the planetary gearset (PGT) is located on a first side (SP11) of a first geometric sectional plane (SP1) intersecting the differential gear (118) and wherein at least one of the first and second gearsets (GS1, GS2) is located on a second opposite side (SP12) of the first geometric sectional plane (SP1).

2. The powertrain (100) according to claim 1, wherein the first and the second gearsets (GS1, GS2) are located on the second opposite side (SP12) of the first geometric sectional plane (SP1).

3. The powertrain (100) according to any one of the preceding claims, wherein a respective rotational axis (x1, x3) of the input shaft (5) and/or the output shaft (16) is perpendicular to the first geometric sectional plane (SP1).

4. The powertrain (100) according to any one of the preceding claims, further comprising a final drive gearset (114) drivingly connecting the propeller shaft (16') to the differential gear (118).

5. The powertrain (100) according to claim 4, wherein the final drive gearset (114) is a bevel gearset.

6. The powertrain (100) according to claim 5, wherein the bevel gearset (114) is a hypoid bevel gearset.

7. The powertrain (100) according to claim 4, wherein the final drive gearset (114) comprises at least a first and second drivingly connected cylindrical gearwheels.

8. The powertrain (100) according to any one of claims 4-7, wherein the final drive gearset (114) comprises a final drive first gearwheel (117) which is drivingly connected to the differential gear (118), wherein the planetary gearset (PGT) and the final drive first gearwheel (117) are located so that a second geometric sectional plane (SP2) which is perpendicular to a longitudinal direction (L) of the powertrain (100) intersects the planetary gearset (PGT) and the final drive first gearwheel (117).

9. The powertrain (100) according to any one of the preceding claims, wherein at least one of the at least two gear engaging devices (A4) is located on the first side (SP11) of the first geometric sectional plane (SP1).

10. The powertrain (100) according to any one of the preceding claims, wherein a second gear engaging device (A12) of the at least two gear engaging devices is configured to provide the first selectable gear connection (1a-c) and the second selectable gear connection (2).

11. The powertrain (100) according to any one of the preceding claims, wherein the transmission (T) is configured to provide the fourth selectable gear connection (4a-b) by directly locking the planet ring gearwheel (8) to the fixed member (10) or by locking the planet ring gearwheel (8) to the fixed member (10) via the first gearwheel (11) and/or the second gearwheel (12).

12. The powertrain (100) according to any one of the preceding claims, wherein the third, fourth and fifth gearwheels (13, 14, 15) are arranged so that they are provided in a first common gear plane of the transmission (T) which is perpendicular to rotational axes (x1, x2, x3) of the third, fourth and fifth gearwheels (13, 14, 15).

13. The powertrain (100) according to any one of the preceding claims, wherein the first and second gearwheels (11, 12) are arranged so that they are provided in a second common gear plane of the transmission (T) which is perpendicular to rotational axes (x1, x2) of the first and second gearwheels (11, 12).

14. The powertrain (100) according to any one of the preceding claims, wherein the first gearset (GS1) is arranged in-between the planetary gearset (PGT) and the second gearset (GS2).

15. A vehicle (200) comprising a powertrain (100) according to any one of the preceding claims.

## Patentansprüche

1. Antriebsstrang (100) für ein Fahrzeug (200), wobei der Antriebsstrang (100) Folgendes umfasst:
- ein Getriebe (T), eine Antriebswelle (16') und ein Differentialgetriebe (118), wobei das Getriebe (T) eine Abtriebswelle (16) umfasst, die antriebsmäßig mit der Antriebswelle (16') verbunden ist oder verbunden werden kann, die Antriebswelle (16') antriebsmäßig mit dem Differentialgetriebe (118) verbunden ist und das Differentialgetriebe (118) dazu konfiguriert ist, einer jeweiligen Halbwelle (119a, 119b) einer Antriebsachse (119) ein Antriebsdrehmoment bereitzustellen, um das Fahrzeug (200) anzutreiben, und
wobei das Getriebe (T) ferner Folgendes umfasst:
- eine Eingangswelle (5), die dazu konfiguriert ist, antriebsmäßig mit einer Antriebseinheit (110) verbunden zu werden;
- ein Planetengetriebe (PGT), das ein Sonnenrad (6), ein oder mehrere Planetenräder (7), einen Planetenradträger (9) und ein Hohlrad (8) umfasst;
- einen ersten Zahnradsatz (GS1), der ein erstes Zahnrad (11) und ein zweites Zahnrad (12) umfasst;
- einen zweiten Zahnradsatz (GS2), der ein drittes Zahnrad (13), ein viertes Zahnrad (14) und ein fünftes Zahnrad (15) umfasst;
- wobei das erste Zahnrad (11) in Antriebsverbindung mit dem zweiten Zahnrad (12) steht, das dritte und das vierte Zahnrad (13, 14) jeweils in Antriebsverbindung mit dem fünften Zahnrad (15) stehen und wobei eines des dritten, des vierten oder des fünften Zahnrads (13, 14, 15) drehbar mit der Abtriebswelle (16) verbunden werden kann oder verbunden ist, und
- wobei das Getriebe (T) ferner mindestens zwei Gangschaltvorrichtungen (A12, A3, A4) umfasst, die dazu konfiguriert sind, mindestens vier auswählbare Getriebeverbindungen bereitzustellen, umfassend:
- eine erste auswählbare Getriebeverbindung (1a-c), bei der das Planetengetriebe (PGT) intern verriegelt ist;
- eine zweite auswählbare Getriebeverbindung (2), bei der der Planetenradträger (9) drehbar mit dem dritten Zahnrad (13) verbunden ist;
- eine dritte auswählbare Getriebeverbindung (3), bei der das Hohlrad (8) antriebsmäßig mit dem vierten Zahnrad (14) verbunden ist; und
- eine vierte auswählbare Getriebeverbindung (4a-b), bei der das Hohlrad (8) mit einem feststehenden Element (10) drehverriegelt ist;
- wobei das Hohlrad (8) drehbar mit dem ersten Zahnrad (11) verbunden ist oder verbunden werden kann, und wobei eine erste Gangschaltvorrichtung (A3) der mindestens zwei Gangschaltvorrichtungen dazu konfiguriert ist, in einem ersten Zustand der ersten Gangschaltvorrichtung bereitgestellt zu werden, in dem die erste Gangschaltvorrichtung (A3) das zweite Zahnrad (12) mit dem vierten Zahnrad (14) drehfest verbindet, sowie in einem zweiten Zustand der ersten Gangschaltvorrichtung, in dem die erste Gangschaltvorrichtung (A3) das zweite Zahnrad (12) vom vierten Zahnrad (14) rotationsmäßig trennt, wobei die dritte auswählbare Getriebeverbindung (3) dadurch bereitgestellt wird, dass mindestens die erste Gangschaltvorrichtung (A3) in den ersten Zustand der ersten Gangschaltvorrichtung versetzt wird, und
- wobei sich das Planetengetriebe (PGT) auf einer ersten Seite (SP11) einer ersten geometrischen Schnittebene (SP1) befindet, die das Differentialgetriebe (118) schneidet, und wobei sich mindestens eines des ersten und des zweiten Zahnradsatzes (GS1, GS2) auf einer zweiten, gegenüberliegenden Seite (SP12) der ersten geometrischen Schnittebene (SP1) befindet.

2. Antriebsstrang (100) nach Anspruch 1, wobei sich der erste und der zweite Zahnradsatz (GS1, GS2) auf der zweiten, gegenüberliegenden Seite (SP12) der ersten geometrischen Schnittebene (SP1) befinden.

3. Antriebsstrang (100) nach einem der vorhergehenden Ansprüche, wobei eine jeweilige Drehachse (x1, x3) der Eingangswelle (5) und/oder der Abtriebswelle (16) senkrecht zur ersten geometrischen Schnittebene (SP1) verläuft.

4. Antriebsstrang (100) nach einem der vorhergehenden Ansprüche, der ferner einen Endantriebs-Zahnradsatz (114) umfasst, der die Antriebswelle (16') antriebsmäßig mit dem Differentialgetriebe (118) verbindet.

5. Antriebsstrang (100) nach Anspruch 4, wobei der Endantriebs-Zahnradsatz (114) ein Kegelradsatz ist.

6. Antriebsstrang (100) nach Anspruch 5, wobei der Kegelradsatz (114) ein Hypoid-Kegelradsatz ist.

7. Antriebsstrang (100) nach Anspruch 4, wobei der Endantriebs-Zahnradsatz (114) mindestens ein erstes und ein zweites antriebsmäßig verbundenes Stirnrad umfasst.

8. Antriebsstrang (100) nach einem der Ansprüche 4-7, wobei der Endantriebs-Zahnradsatz (114) ein erstes Endantriebszahnrad (117) umfasst, das antriebsmäßig mit dem Differentialgetriebe (118) verbunden ist, wobei das Planetengetriebe (PGT) und das erste Endantriebszahnrad (117) so angeordnet sind, dass eine zweite geometrische Schnittebene (SP2), die senkrecht zu einer Längsrichtung (L) des Antriebsstrangs (100) verläuft, das Planetengetriebe (PGT) und das erste Endantriebszahnrad (117) schneidet.

9. Antriebsstrang (100) nach einem der vorhergehenden Ansprüche, wobei sich mindestens eine der mindestens zwei Gangschaltvorrichtungen (A4) auf der ersten Seite (SP11) der ersten geometrischen Schnittebene (SP1) befindet.

10. Antriebsstrang (100) nach einem der vorhergehenden Ansprüche, wobei eine zweite Gangschaltvorrichtung (A12) der mindestens zwei Gangschaltvorrichtungen dazu konfiguriert ist, die erste auswählbare Getriebeverbindung (1a-c) und die zweite auswählbare Getriebeverbindung (2) bereitzustellen.

11. Antriebsstrang (100) nach einem der vorhergehenden Ansprüche, wobei das Getriebe (T) dazu konfiguriert ist, die vierte auswählbare Getriebeverbindung (4a-b) bereitzustellen, indem das Hohlrad (8) direkt mit dem feststehenden Element (10) verriegelt wird oder indem das Hohlrad (8) über das erste Zahnrad (11) und/oder das zweite Zahnrad (12) mit dem feststehenden Element (10) verriegelt wird.

12. Antriebsstrang (100) nach einem der vorhergehenden Ansprüche, wobei das dritte, das vierte und das fünfte Zahnrad (13, 14, 15) so angeordnet sind, dass sie in einer ersten gemeinsamen Zahnradebene des Getriebes (T) vorgesehen sind, die senkrecht zu den Drehachsen (x1, x2, x3) des dritten, des vierten und des fünften Zahnrads (13, 14, 15) verläuft.

13. Antriebsstrang (100) nach einem der vorhergehenden Ansprüche, wobei das erste und das zweite Zahnrad (11, 12) so angeordnet sind, dass sie in einer zweiten gemeinsamen Zahnradebene des Getriebes (T) vorgesehen sind, die senkrecht zu den Drehachsen (x1, x2) des ersten und des zweiten Zahnrads (11, 12) verläuft.

14. Antriebsstrang (100) nach einem der vorhergehenden Ansprüche, wobei der erste Zahnradsatz (GS1) zwischen dem Planetengetriebe (PGT) und dem zweiten Zahnradsatz (GS2) angeordnet ist.

15. Fahrzeug (200), das einen Antriebsstrang (100) nach einem der vorhergehenden Ansprüche umfasst.

## Revendications

1. Groupe motopropulseur (100) pour véhicule (200), le groupe motopropulseur (100) comprenant :
- une transmission (T), un arbre de transmission (16') et un engrenage différentiel (118), la transmission (T) comprenant un arbre de sortie (16) qui est relié ou peut être relié à l'arbre de transmission (16'), l'arbre de transmission (16') étant relié de manière motrice à l'engrenage différentiel (118) et l'engrenage différentiel (118) étant configuré pour fournir un couple d'entraînement à un demi-arbre respectif (119a, 119b) d'un essieu moteur (119) pour entraîner le véhicule (200), et la transmission (T) comprenant en outre :
- un arbre d'entrée (5) configuré pour être relié de manière motrice à une unité de puissance (110) ;
- un train planétaire (PGT) comprenant un planétaire (6), un ou plusieurs satellites (7), un porte-satellites (9) et une couronne planétaire (8) ;
- un premier train d'engrenages (GS1) comprenant une première roue dentée (11) et une deuxième roue dentée (12) ;
- un deuxième train d'engrenages (GS2) comprenant une troisième roue dentée (13), une quatrième roue dentée (14) et une cinquième roue dentée (15) ;
- la première roue dentée (11) étant en connexion d'entraînement avec la deuxième roue dentée (12), chacune des troisième et quatrième roues dentées (13, 14) étant en connexion d'entraînement avec la cinquième roue dentée (15) et l'une des troisième, quatrième ou cinquième roues dentées (13, 14, 15) pouvant être reliée de manière rotative ou reliée à l'arbre de sortie (16), et
- la transmission (T) comprenant en outre au moins deux dispositifs d'engagement de vitesses (A12, A3, A4) qui sont configurés pour établir au moins quatre connexions d'engrenages sélectionnables, comprenant :
- une première connexion de vitesse sélectionnable (1a-c) dans laquelle le train planétaire (PGT) est verrouillé intérieurement ;
- une deuxième connexion de vitesse sélectionnable (2) dans laquelle le porte-satellites (9) est relié en rotation à la troisième roue dentée (13) ;
- une troisième connexion de vitesse sélectionnable (3) dans laquelle la couronne planétaire (8) est reliée de manière motrice à la quatrième roue dentée (14) ; et
- une quatrième connexion de vitesse sélectionnable (4a-b) dans laquelle la couronne planétaire (8) est bloquée en rotation sur un élément fixe (10) ;
- la couronne planétaire (8) étant reliée ou pouvant être reliée de manière rotative à la première roue dentée (11), et un premier dispositif d'engagement de vitesse (A3) des au moins deux dispositifs d'engagement de vitesse étant configuré pour être mis dans un premier état de dispositif d'engagement de vitesse où le premier dispositif d'engagement de vitesse (A3) relie de manière rotative la deuxième roue dentée (12) à la quatrième roue dentée (14) et dans un second état de dispositif d'engagement de vitesse où le premier dispositif d'engagement de vitesse (A3) déconnecte en rotation la deuxième roue dentée (12) de la quatrième roue dentée (14), la troisième connexion de vitesse sélectionnable (3) étant réalisée par au moins le réglage du premier dispositif d'engagement de vitesse (A3) dans le premier état du dispositif d'engagement de vitesse, et
- le train planétaire (PGT) étant situé sur un premier côté (SP11) d'un premier plan de coupe géométrique (SP1) coupant l'engrenage différentiel (118) et au moins un des premier et deuxième trains d'engrenages (GS1, GS2) étant situé sur un second côté opposé (SP12) du premier plan de coupe géométrique (SP1).

2. Groupe motopropulseur (100) selon la revendication 1, dans lequel les premier et deuxième trains d'engrenages (GS1, GS2) sont situés sur le second côté opposé (SP12) du premier plan de coupe géométrique (SP1).

3. Groupe motopropulseur (100) selon l'une quelconque des revendications précédentes, dans lequel un axe de rotation respectif (xl, x3) de l'arbre d'entrée (5) et/ou de l'arbre de sortie (16) est perpendiculaire au premier plan de coupe géométrique (SP1).

4. Groupe motopropulseur (100) selon l'une quelconque des revendications précédentes, comprenant en outre un train d'engrenages de transmission finale (114) reliant de manière motrice l'arbre de transmission (16') à l'engrenage différentiel (118).

5. Groupe motopropulseur (100) selon la revendication 4, dans lequel le train d'engrenages de transmission finale (114) est un train d'engrenages coniques.

6. Groupe motopropulseur (100) selon la revendication 5, dans lequel le train d'engrenages coniques (114) est un train d'engrenages coniques hypoïdes.

7. Groupe motopropulseur (100) selon la revendication 4, dans lequel le train d'engrenages de transmission finale (114) comprend au moins une première et une seconde roues dentées cylindriques reliées de manière motrice.

8. Groupe motopropulseur (100) selon l'une quelconque des revendications 4 à 7, dans lequel le train d'engrenages de transmission finale (114) comprend une première roue dentée de transmission finale (117) qui est reliée de manière motrice à l'engrenage différentiel (118), le train planétaire (PGT) et la première roue dentée de transmission finale (117) étant situés de telle sorte qu'un second plan de coupe géométrique (SP2) qui est perpendiculaire à une direction longitudinale (L) du groupe motopropulseur (100) coupe le train planétaire (PGT) et la première roue dentée de transmission finale (117).

9. Groupe motopropulseur (100) selon l'une quelconque des revendications précédentes, dans lequel au moins l'un des au moins deux dispositifs d'engagement de vitesse (A4) est situé sur le premier côté (SP11) du premier plan de coupe géométrique (SP1).

10. Groupe motopropulseur (100) selon l'une quelconque des revendications précédentes, dans lequel un second dispositif d'engagement de vitesse (A12) des au moins deux dispositifs d'engagement de vitesse est configuré pour établir la première connexion de vitesse sélectionnable (1a-c) et la deuxième connexion de vitesse sélectionnable (2).

11. Groupe motopropulseur (100) selon l'une quelconque des revendications précédentes, dans lequel la transmission (T) est configurée pour établir la quatrième connexion de vitesse sélectionnable (4a-b) en verrouillant directement la couronne planétaire (8) sur l'élément fixe (10) ou en verrouillant la couronne planétaire (8) sur l'élément fixe (10) via la première roue dentée (11) et/ou la deuxième roue dentée (12).

12. Groupe motopropulseur (100) selon l'une quelconque des revendications précédentes, dans lequel les troisième, quatrième et cinquième roues dentées (13, 14, 15) sont agencées de telle sorte qu'elles soient prévues dans un premier plan d'engrenage commun de la transmission (T) qui est perpendiculaire aux axes de rotation (x1, x2, x3) des troisième, quatrième et cinquième roues dentées (13, 14, 15).

13. Groupe motopropulseur (100) selon l'une quelconque des revendications précédentes, dans lequel les première et deuxième roues dentées (11, 12) sont agencées de telle sorte qu'elles soient prévues dans un second plan d'engrenage commun de la transmission (T) qui est perpendiculaire aux axes de rotation (x1, x2) des première et seconde roues dentées (11, 12).

14. Groupe motopropulseur (100) selon l'une quelconque des revendications précédentes, dans lequel le premier train d'engrenages (GS1) est agencé entre le train planétaire (PGT) et le deuxième train d'engrenages (GS2).

15. Véhicule (200) comprenant un groupe motopropulseur (100) selon l'une quelconque des revendications précédentes.
